# EUROPEAN PATENT APPLICATION

(11) **EP 4 847 237 A1**
(43) Date of publication of application: **02.12.2026**
(21) Application number: 26178844.2
(22) Date of filing: 15.05.2026
(51) Int. Cl.: B29C 65/74, B29C 65/08, B29C 65/36, B29L 31/00, B65B 9/20, B65B 51/22

(54) **SEALING DEVICE, PACKAGE FORMING APPARATUS FOR A PACKAGING MACHINE AND PACKAGING MACHINE FOR FORMING PACKAGES FILLED WITH A POURABLE PRODUCT**

(30) Priority: 26.05.2025 IT 202500011965
(71) Applicant: Tetra Laval Holdings & Finance S.A., 1009 Pully (CH)
(72) Inventor: MORSELLI, Gianni, 41123 Modena (IT); ORSINI, Ivan, 41123 Modena (IT); DE PIETRI TONELLI, Roberto, 41123 Modena (IT); ANDRADE, Jefferson Luis, 41123 Modena (IT); RIMONDI, Fabrizio, 41123 Modena (IT); GIAMPIERI, Andrea, 41123 Modena (IT)
(74) Representative: Tetra Pak Patent Attorneys

(57) **Abstract**

There is described a sealing device (24) for transversally sealing a tube (4) filled with a pourable product. The sealing device (24) comprises a sealing group (26) having an initiator unit (28) for initiating transversal sealing, a support structure (38) for carrying the initiator unit (28) and one or more spherical joints (40) connecting the initiator unit (28) to the support structure (38). Each spherical joint (40) comprises a first portion (41) having a first spherical surface (42) and a second portion (43) having a second spherical surface (44) engaged with the first spherical surface (42). The first portion (41) is connected to the initiator unit (28) and the second portion (43) is connected to the support structure (38). The sealing device (24) comprises a first locking group (80) controllable in a fixing configuration in which the first portion (41) and the second portion (43) are not movable with respect to one another and a release configuration in which the first portion (41) and the second portion (43) are movable with respect to one another.

## Description

### TECHNICAL FIELD

The present invention relates to a sealing device for transversally sealing a tube filled with a pourable product.

Advantageously, the present invention also relates to a package forming apparatus for forming packages form a tube filled with a pourable product and comprising one or more sealing devices.

Advantageously, the present invention also relates to a packaging machine for forming packages filled with a pourable product and comprising a package forming apparatus.

### BACKGROUND ART

As is known, many liquid or pourable food products, such as fruit juice, UHT (ultra-high-temperature treated) milk, wine, tomato sauce, etc., are sold in packages made of sterilized packaging material.

A typical example is the parallelepiped-shaped package for liquid or pourable food products known as Tetra Brik Aseptic (registered trademark), which is made by sealing and folding laminated strip packaging material. The packaging material has a multilayer structure comprising a base layer, e.g. of paper, covered on both sides with layers of heat-seal plastic material, e.g. polyethylene. In the case of aseptic packages for long-storage products, such as UHT milk, the packaging material also comprises a layer of oxygen-barrier material (an oxygen-barrier layer), e.g. an aluminum foil, which is superimposed on a layer of heat-seal plastic material, and is in turn covered with another layer of heat-seal plastic material forming the inner face of the package eventually contacting the food product.

Packages of this sort are normally produced on fully automatic packaging machines, which advance a web of packaging material through a sterilization apparatus for sterilizing the web of packaging material at a sterilization station and to an isolation chamber (a closed and sterile environment) in which the sterilized web of packaging material is maintained and advanced. During advancement of the web of packaging material through the isolation chamber, the web of packaging material is folded and sealed longitudinally at a tube forming station to form a tube having a longitudinal seam portion, the tube being further fed along a vertical advancing direction.

For completing the forming operations, the tube is filled with a pourable product, in particular a pourable food product, and is transversally sealed and subsequently cut along equally spaced transversal cross sections within a package forming apparatus of the packaging machine during advancement along the vertical advancing direction.

Pillow packages are so obtained, each pillow package having a longitudinal sealing band, a top transversal sealing band and a bottom transversal sealing band.

A typical packaging machine comprises a conveying device for advancing the web of packaging material along a web advancement path and the tube formed from the web of packaging material along a tube advancement path, the sterilization apparatus for sterilizing the web of packaging material prior to its formation into the tube, a tube forming and sealing device at least partially arranged within the isolation chamber and being configured to form the tube from the advancing web of packaging material and to longitudinally seal the tube, a filling device for filling the tube with the pourable product and the package forming apparatus adapted to form, transversally seal and cut individual packages from the tube of packaging material.

The package forming apparatus comprises a plurality of operative devices, each having one respective first operative group and one respective second operative group and a conveying unit configured to advance each first operative group and each second operative group along respective advancement paths. Moreover, each first operative group and the respective second operative group are configured to form and shape the tube in cooperation with one another when advancing in alignment with the tube and along respective active portions of the respective advancement paths.

Each operative device comprises a respective sealing device configured to transversally seal the tube along a respective transversal sealing band and a cutting element configured to transversally cut the tube at the respective transversal sealing band.

Each sealing device comprises an active sealing group having a sealing initiator unit and a passive counter-sealing group, in particular a sealing anvil.

Each active sealing group and the respective passive counter-sealing group are designed to compress the tube in cooperation with one another.

Prior to starting operation of the packaging machine, it is necessary that a technical operator aligns each active sealing group with respect to the respective passive counter-sealing group. Preferentially, these alignment operations are done by an experienced technical operator.

Even though the known sealing devices work satisfactorily well, a desire is felt in the sector to further improve the known sealing devices, in particular so as to facilitate the alignment between each active sealing group and the respective passive counter-sealing group.

### DISCLOSURE OF INVENTION

It is therefore an object of the present invention to provide an improved sealing device coming along with the possibility of easily aligning the respective active sealing group and the respective passive counter-sealing group.

Additionally, it is an object of the present invention to provide an improved package forming apparatus for forming packages from a tube filled with a pourable product and comprising one or more sealing devices.

Moreover, it is an object of the present invention to provide an improved packaging machine for forming packages filled with a pourable product and comprising a package forming apparatus.

According to the present invention, there is provided a sealing device as claimed in claim 1.

Preferred non-limiting embodiments are claimed in the claims being directly or indirectly dependent on claim 1.

According to the present invention, there is also provided a package forming apparatus according to any one of claims 13 to 15.

According to the present invention, there is also provided a packaging machine according to claim 16.

### BRIEF DESCRIPTION OF THE DRAWINGS

A non-limiting embodiment of the present invention will be described by way of example with reference to the accompanying drawings, in which:
Figure 1 is a schematic view of a packaging machine comprising a package forming apparatus according to the present invention, with parts removed for clarity;
Figure 2 is a schematic view of a detail of the package forming apparatus of the packaging machine of Figure 1, with parts removed for clarity;
Figure 3 is a perspective view of a sealing device of the package forming apparatus of the packaging machine of Figure 1, with parts removed for clarity;
Figure 4 is an exploded view of the sealing device of Figure 3, with parts removed for clarity;
Figure 5 is a top view of the sealing device of Figure 3, with parts removed for clarity;
Figure 6 is an enlarged perspective view of a detail of Figure 5, with parts removed for clarity;
Figure 7 is a section along plane VII-VII of the detail of Figure 6; and
Figures 8A and 8B are two different perspective exploded views of parts of the detail of Figure 6, with parts removed for clarity.

### BEST MODES FOR CARRYING OUT THE INVENTION

The elements and features illustrated in the preferred embodiment, including drawings, may be combined with each other without going beyond the scope of protection of this application as described below.

Number 1 indicates as a whole a packaging machine for producing sealed packages 2 of a pourable product, in particular a pourable food product, such as milk, milk drinks, yoghurt, yoghurt drinks, fruit juice, wine, tomato sauce, emulsions, beverages containing pulp, salt, sugar etc.

In more detail, packaging machine 1 is configured to produce packages 2 from a multilayer packaging material. Preferentially, the multilayer packaging material has heat seal properties (i.e. portions of the multilayer packaging material can be sealed to one another).

In further detail, the multilayer packaging material comprises at least one layer of fibrous material, such as e.g. paper or cardboard, and at least two layers of heat-seal plastic material, e.g. polyethylene, interposing the layer of fibrous material in between one another. Preferentially, one of these two layers of heat-seal plastic material may define the inner face of packages 2 contacting the pourable product.

Moreover, the multilayer packaging material may also comprise a layer of gas and/or water vapor and/or light barrier material, preferentially being arranged between one of the layers of heat-seal plastic material and the layer of fibrous material.

In particular, suitable materials for serving as the layer of gas and/or water vapour and/or light-barrier material include aluminium foil, paper materials and treated paper materials such as high-density or grease-proof papers, barrier-coated substrates such as cellulose based and polymeric substrates, metalized substrates such as cellulose-based or polymeric substrates with and without pre-applied barrier coating, barrier-coated polymer films such as olefinic polymer or polyamide films, combinations of these materials, and further materials having similar barrier properties.

Preferentially, the packaging material may also comprise a further layer of heat-seal plastic material being interposed between the layer of gas and/or water vapor and/or light barrier material and the layer of fibrous material.

In further detail, the multilayer packaging material may be provided in the form of a web 3.

Furthermore, packaging machine 1 may be configured to produce packages 2 by forming a tube 4 from web 3, longitudinally sealing tube 4, filling tube 4 with the pourable product and by transversally sealing and cutting tube 4.

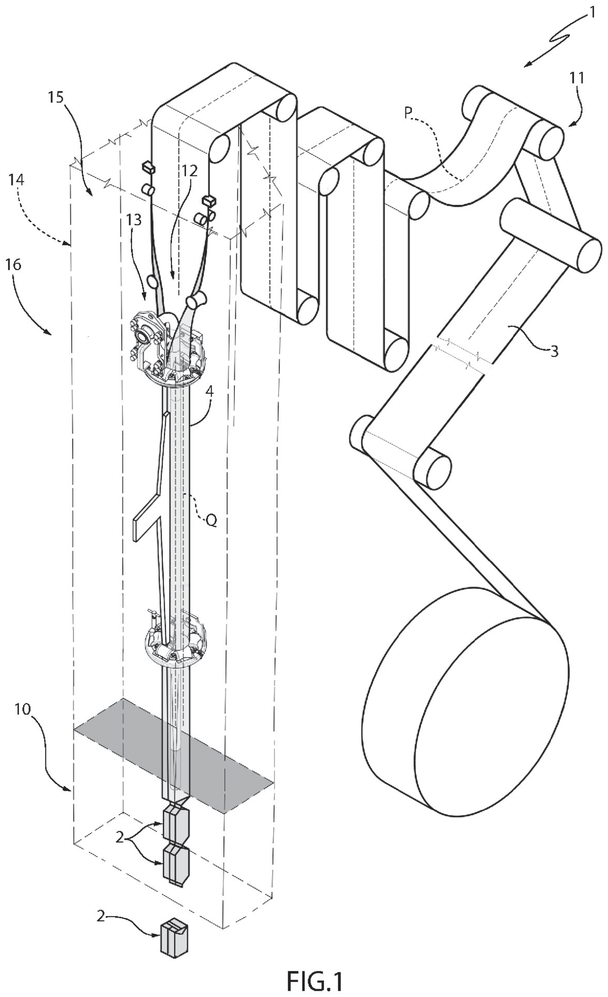

With particular reference to Figure 1, packaging machine 1 comprises a package forming apparatus 10 configured to transversally seal and to transversally cut tube 4 for obtaining packages 2. Preferentially, package forming apparatus 10 may also be configured to form tube 4.

Moreover, packaging machine 1 may also comprise:
- a conveying device 11 configured to advance web 3 along a web advancement path P, preferentially to a tube forming station, at which, in use, web 3 is formed into tube 4, and also configured to advance tube 4 along a tube advancement path Q; and/or
- a tube forming and sealing device 12 configured to fold tube 4 from the, in use, advancing web 3 and to longitudinally seal tube 4; and/or
- a filling device 13 for filling tube 4 with the pourable product.

In further detail, packaging machine 1 may also comprise an isolation chamber 14, preferentially delimiting an inner environment 15 from an outer environment 16. Preferentially, inner environment 15 may be a sterile environment, preferably containing a controlled atmosphere.

Preferentially, tube forming and sealing device 12 may be at least partially arranged within isolation chamber 14, in particular inner environment 15, and configured to fold and longitudinally seal tube 4 within isolation chamber 14, in particular inner environment 15.

Moreover, packaging machine 1 may also comprise a sterilization unit configured to sterilize the, in use, advancing web 3, preferentially the sterilization unit being arranged upstream of tube forming and sealing device 12 along web advancement path P.

In more detail, conveying device 11 may be configured to advance tube 4 and any intermediates of tube 4 along tube advancement path Q, preferentially from tube forming and sealing device 12 to package forming apparatus 10. Preferentially, with the wording intermediates of tube 4 any configuration of web 3 is meant prior to obtaining the tube structure and after folding of web 3 by tube forming and sealing device 12 has started. In other words, the intermediates of tube 4 are a result of the gradual folding of web 3 so as to obtain tube 4, preferentially by overlapping the (longitudinal) edges of web 3 with one another.

According to some possible non-limiting embodiments, tube forming and sealing device 12 may be arranged such that tube 4 has a vertical orientation.

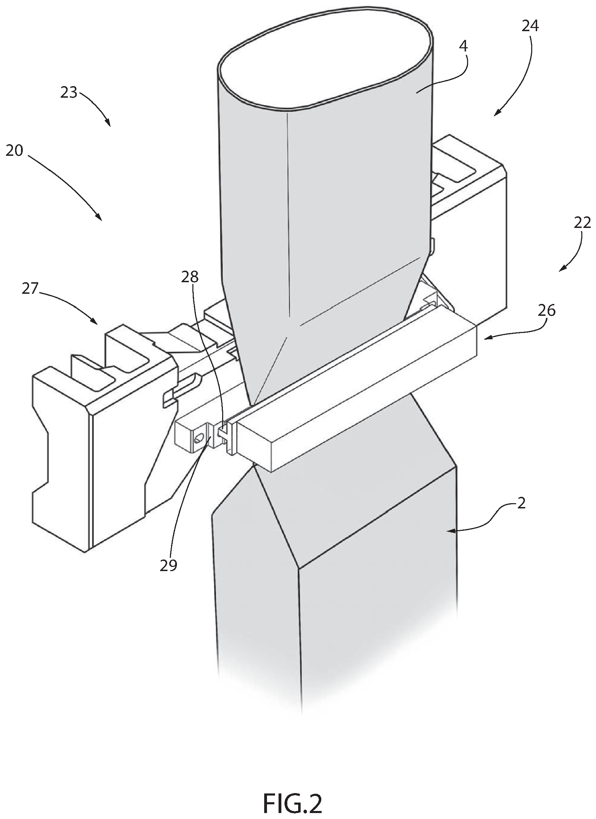

With particular reference to Figure 2, package forming apparatus 10 comprises one or more, preferentially a plurality of, operative devices 20 (only one is partially shown), each one configured to at least transversally seal tube 4 and preferentially to transversally cut and form (shape) tube 4.

Moreover, package forming apparatus 10 comprises a conveying unit configured to advance operative devices 20.

Preferentially, package forming apparatus 10 may be configured to control operative devices 20 and conveying unit such to transversally seal and cut tube 4 along equally spaced transversal cross sections.

With particular reference to Figures 2 to 5, each operative device 20 comprises at least a first operative group 22 and a second operative group 23 configured to cooperate with one another so as to at least transversally seal, and preferentially to also transversally cut and to at least partially form, tube 4.

The conveying unit may be configured to advance first operative groups 22 and second operative groups 23 along respective (endless) advancement paths.

Moreover, each first operative group 22 and the respective second operative group 23 may be configured to cooperate with one another for forming a package 2 when advancing along respective operative portions of the respective advancement paths. In particular, each first operative group 22 and the respective second operative group 23 engage tube 4 from opposite sides thereof while advancing along the respective operative portions.

Additionally, each advancement path comprises a respective return portion, which allows to return first operative groups 22 and second operative groups 23 back to the respective operative portions.

In particular, first operative groups 22 and second operative groups 23 advance parallel to tube 4, i.e. parallel to tube advancement path Q, when advancing along the respective operative portions.

In further detail, each operative device 20 may also comprise a forming shell assembly configured to form tube 4, preferentially to at least partially define the shape of packages 2.

In more detail, each forming shell assembly comprises two respective half-shells (not shown and known as such) configured to contact tube 4 from opposite sides thereof and to at least partially define in cooperation with one another the shape of packages 2. Preferentially, each first operative group 22 and each second operative group 23 comprises one respective half-shell.

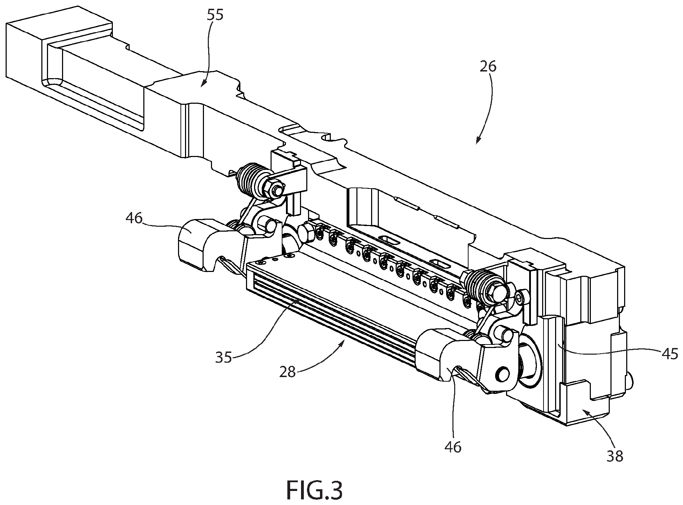

With particular reference to Figures 2 and 3, each operative device 20 comprises one sealing device 24 configured to transversally seal tube 4.

Additionally, each operative device 20 may comprise one cutting assembly configured to transversally cut tube 4.

In more detail and with particular reference to Figure 2, each sealing device 24 comprises a sealing group 26 and a counter-sealing group 27 configured to seal in cooperation with each other tube 4, preferentially for creating a respective transversal sealing band.

More specifically, each sealing group 26 and the respective counter-sealing group 27 may be configured to engage tube 4 from opposite sides thereof so as to transversally compress, in particular flat-lay and squeeze, tube 4 and to transversally seal tube 4.

In particular, each first operative group 22 comprises the respective sealing group 26 and each second operative group 23 comprises the respective counter-sealing group 27.

More specifically, in use, each sealing group 26 and the respective counter-sealing group 27 are configured to engage tube 4 while the respective first operative group 22 and the respective second operative group 23 advance along the respective operative portions.

In further detail, each sealing group 26 comprises an initiator unit 28 for initiating transversal sealing. In particular, initiator unit 28 has a source configured to generate the energy needed to obtain the sealing effect. For example, the source may comprise a sonotrode having ultrasound-emitters or an electromagnetic induction source for generating heat by means of induction heating.

Each counter-sealing group 27 is a passive element (i.e. not having an active source). In particular, each counter-sealing group 27 comprises a sealing anvil 29.

In further detail, each sealing group 26, in particular, each initiator unit 28, comprises a first sealing surface 35 configured to engage, in use, tube 4, in particular for transversally compressing, more in particular for flat-laying and squeezing, tube 4 in collaboration with a second sealing surface 36 of counter-sealing group 27, in particular of sealing anvil 29.

Moreover, each first sealing surface 35, and also each second sealing surface 36, extends along a respective longitudinal axis A. In particular, each longitudinal axis A is perpendicular to the longitudinal axis of tube 4 when, in use, the respective first sealing surface 35 and the respective second sealing surface 36 compress, in collaboration with each other, tube 4.

Additionally, in use, longitudinal axis A of each first sealing surface 35 and longitudinal axis A of the respective second sealing surface 36 are parallel to one another, when, in use, first sealing surface 35 and second sealing surface 36 compress tube 4.

With particular reference to Figures 3 to 5, initiator unit 28 comprises a housing 37 having an inner space and one or more active elements arranged within the inner space. In particular, active elements define the source configured to generate the energy needed to obtain the sealing effect. More in particular, active elements are configured to induce oscillations, preferentially in the ultrasound range, of the respective first sealing surface 35.

With particular reference to Figures 3 to 5, each sealing group 26 has also a support structure 38 for carrying initiator unit 28 and a connecting group 39 connecting initiator unit 28 to support structure 38.

With particular reference to Figures 3 to 8B, each connecting group 39 comprises one or more spherical joints 40 connecting initiator unit 28 to the respective support structure 38.

Thanks to spherical joints 40 it is possible to easily align sealing group 26, in particular initiator unit 28, more in particular first sealing surface 35, with respect to counter-sealing group 27, in particular sealing anvil 29, more in particular second sealing surface 36.

In further detail, each spherical joint 40 comprises a first portion 41 having a first spherical surface 42 and a second portion 43 having a second spherical surface 44 engaged with first spherical surface 42.

Each first portion 41 is connected, in particular mounted, to initiator unit 28, in particular housing 37, even more particular to a portion of housing 37 opposite to the respective first sealing surface 35. In particular, each first portion 41 is in direct contact with and fixed to the respective initiator unit 28.

Additionally, each second portion 43 is connected, in particular mounted, to support structure 38, in particular a respective carrier 45 of support structure 38. In particular, each second portion 43 is in direct contact with and is fixed to the respective support structure 38, in particular the respective carrier 45.

In particular, each first portion 41 and the respective second portion 43 are arranged such that each first portion 41 is interposed between the respective second portion 43 and the respective initiator unit 28 and each second portion 43 is interposed between the respective first portion 41 and the respective support structure 38.

Advantageously, first spherical surface 42 is convex and second spherical surface 44 is concave.

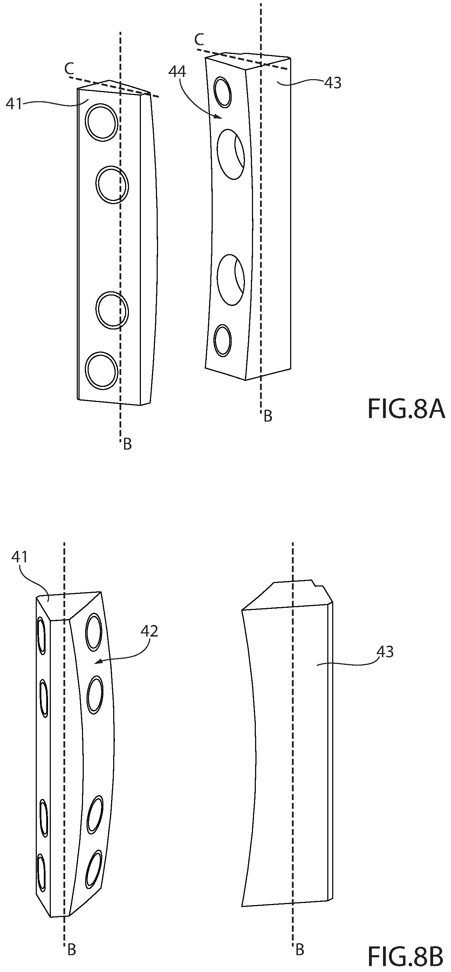

With particular reference to Figures 8A and 8B, each first portion 41 and each second portion 43 has a respective first extension along a first axis B perpendicular to the respective longitudinal axis A and a respective second extension along a second axis C parallel to the respective longitudinal axis A. In particular, each first extension is larger than the respective second extension.

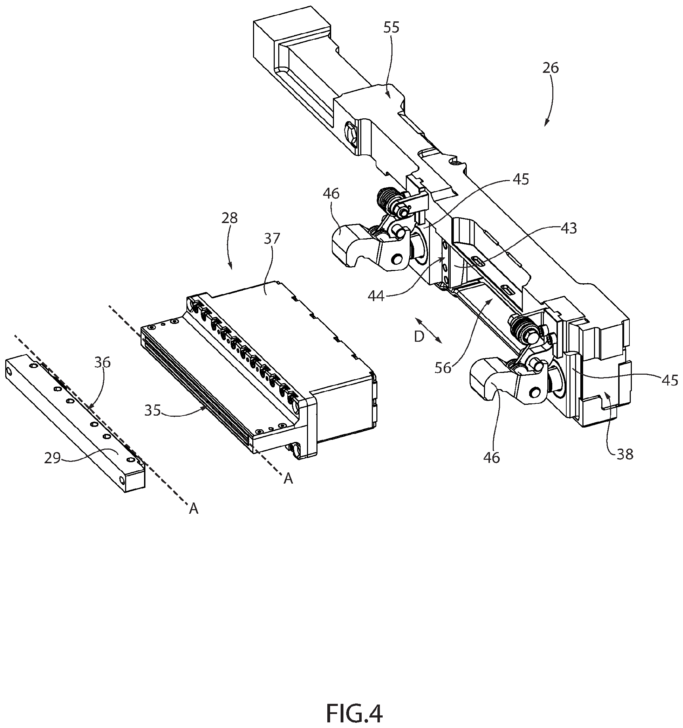

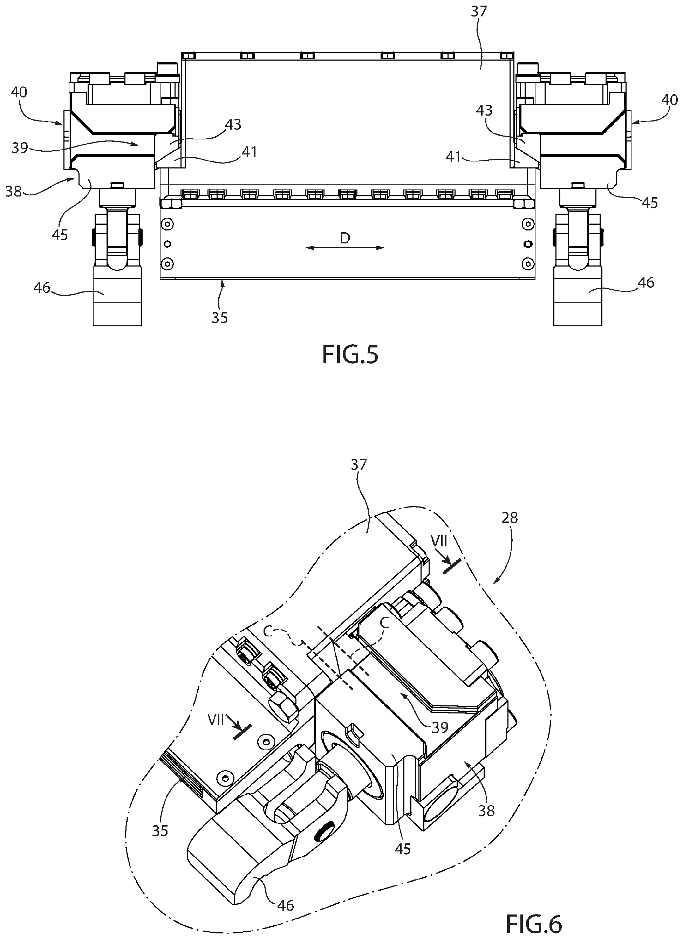

With particular reference to Figures 4 and 5, each sealing device 24, in particular the respective sealing group 26, comprises two spherical joints 40 spaced apart from one another along a direction D parallel to the respective longitudinal axis A.

With particular reference to Figures 3 to 6, carrier 45 is configured to carry and/or carries a respective catch 46 of the respective operative device 20, in particular of the respective first operative group 22.

Additionally, each support structure 38 comprises two carriers 45, in particular spaced apart from one another along the respective direction D.

Moreover, each catch 46 is configured to engage with a respective catch of the respective operative device 20, in particular of the respective second operative group 23, in particular while, in use, the respective sealing group 26 and the respective counter-sealing group 27, transversally compress and seal tube 4 (so as to guarantee a desired transversal compression of tube 4).

In further detail, each cutting assembly comprises a blade configured to transversally cut tube 4, in particular after execution of the transversal sealing.

Advantageously, each counter-sealing group 27 may comprise the respective blade.

Additionally, each sealing group 26, in particular the respective initiator unit 28, may comprise a groove configured to receive a portion of the respective blade.

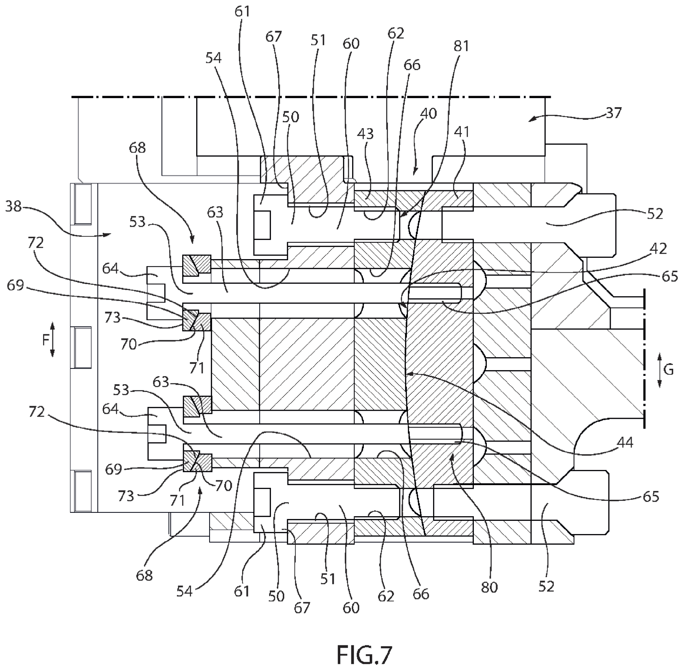

With particular reference to Figure 7, each sealing device 24 comprises a first locking group 80 controllable in a fixing configuration in which first locking group 80 blocks each first portion 41 and the respective second portion 43 (i.e. each first portion 41 and the respective second portion 43 are not movable with respect to one another) and a release configuration in which each first portion 41 and the respective second portion 43 are movable, in particular spherically moveable, with respect to one another.

In particular, with first locking group 80 being controlled in the release configuration, it is possible to induce a relative spherical movement between first portion 41 and the respective second portion 43 meaning that first portion 41 and the respective second portion 43 can be subjected to a relative rotation about a first axis and a second axis perpendicular to one another. In other words, first portion 41 and the respective second portion 43 can be subjected to a relative rotation about a centre point (in particular corresponding to the intersection of first axis and second axis).

Advantageously, first locking group 80 is configured to be controlled in the fixing configuration during operation of sealing device 24. Moreover, prior to operation of sealing device 24 it is possible to control first locking group 80 in the release configuration for allowing to align sealing group 26, in particular initiator unit 28, even more particular first sealing surface 35, with counter-sealing group 27, in particular sealing anvil 29, even more particular second sealing surface 36.

Additionally, each sealing device 26 also comprises a second locking group 81 controllable in a blocking configuration in which second portion 43 is fixed to support structure 38 (i.e. second portion 43 is not movable with respect to support structure 38) and a manipulation configuration in which second portion 43 is movable, in particular linearly movable, as it will be explained in further detail below, with respect to support structure 38.

Advantageously, second locking group 81 is configured to be controlled in the blocking configuration during operation of sealing device 24 (i.e. during operation of sealing device 24 second portion 43 is not movable with respect to support structure 38). Moreover, prior to operation of sealing device 24 it is possible to control second locking group 81 in the manipulation configuration.

With particular reference to Figure 7, each second locking group 81 comprises one or more screw elements 50 configured to secure the respective second portion(s) 43 and the respective support structure 38, in particular the respective carrier 45, to one another.

More specifically, each screw element 50 comprises an elongated body element 60. In particular, each elongated body element 60 has a head element 61 and a thread element 62. Preferentially, each head element 61 and the respective thread element 62 are arranged at opposite ends of the respective elongated body element 60.

Advantageously, each head element 61 is configured to abut against an abutment surface 67 of the respective support structure 38, in particular the respective carrier 45. Moreover, each thread element 62 is configured to be screwed to a threaded hole of the respective second portion 43.

In further detail, each screw element 50, in particular the respective elongated body element 60 passes through a respective through opening 51 of the respective support structure 38, in particular of the respective carrier 45.

Advantageously, each elongated body element 60 has a body element diameter and each through opening 51 has an opening diameter. The opening diameter is larger than the body element diameter. In this way, the first elongated body element 60 may move within the through opening 51 along an adjustment direction F perpendicular to longitudinal axis A.

Advantageously, screw elements 50 and the respective through openings 51 are designed such to allow for a relative linear movement between the respective support structure 38, in particular the respective carrier 45, and the respective second portion 43, in particular along adjustment direction F, with the respective screw elements 50 being loosened.

It should be noted that each second locking group 81 is controlled in the respective blocking configuration and the respective manipulation configuration with the respective screw element(s) 50 being, respectively, fastened and loosened.

In this way, it is possible to adjust the position of the spherical joint 40 along adjustment direction F. In addition, it is possible to align the blade of the cutting assembly and the respective groove.

With particular reference to Figure 7, each first locking group 80 comprises one or more screw members 53 configured to secure the respective first portion 41 and the respective second portion 43 to one another.

Moreover, each first locking group 80 is controlled in the respective fixing configuration and the respective release configuration with the respective screw members 53 being, respectively, fastened and loosened.

Moreover, with the respective screw members 53 being loosened, it is possible to induce a relative spherical movement between the respective first portion 41 and the respective second portion 43.

Additionally, each screw member 53 comprises an elongated body 63. In particular each elongated body 63 has a head 64 and a thread portion 65. In particular, each head 64 and the respective thread portion 65 are arranged at opposite ends of the respective elongated body 63.

Advantageously, each thread portion 65 is configured to be screwed to a threaded hole of the respective first portion 41.

In further detail, each screw member 53, in particular the respective elongated body 63, passes through a respective through hole 54 of the respective support structure 38, in particular of the respective carrier 45, and through a respective through passage 66 of the respective second portion 43.

In even more detail, each elongated body 63 has a body diameter, each through hole 54 has a hole diameter and each through passage 66 has a passage diameter. Advantageously, the hole diameter and the passage diameter are larger than the body diameter. In this way, elongated body 64 may move within through hole 54 and through passage 66 along an adjustment direction G perpendicular to longitudinal axis A. In particular, adjustment direction G is parallel to adjustment direction F. In addition, it is possible to allow for a relative spherical movement between the respective first portion 41 and the respective second portion 43 when the respective screw members 53 are loosened.

Advantageously, each first locking group 80 also comprises one or more spherical washers 68, each spherical washer 68 being interposed between one respective screw member 53, in particular the respective head 64, and the respective support structure 38, in particular the respective carrier 45.

More specifically, each spherical washer 68 comprises a first washer element 69 having a first spherical surface portion 70 and a second washer element 71 having a second spherical surface portion 72.

In particular, each first spherical surface portion 70 and the respective second spherical surface portion 72 engage one another.

Moreover, each first spherical surface portion 70 is configured to cooperate with the respective second spherical surface portion 72 to allow a spherical movement of the respective first washer element 69 and the respective second washer element 71 with respect to each other.

Advantageously, each spherical washer 68 is so shaped as to allow each second head 64 to correctly abut against an abutment surface 73 of the respective washer element 68 (in particular, of the respective first washer element 69) irrespective of the position of elongated body 63. In other words, when first portion 41 and second portion 43 are spherically moved with respect to each other to adjust the position of the respective initiator unit 28 with respect to the respective sealing anvil 29, elongated body 63 may be non-coaxial with respect to the respective through hole 54 and the respective through passage 66. Also in this case, screw member 53 can be properly tightened thanks to the respective spherical washer 68.

With particular reference to Figure 7, each sealing device 24, in particular the respective sealing group 26, also comprises a plurality of screws 52 securing, in particular rigidly constraining, each first portion 41 to the respective initiator unit 28, in particular the respective housing 37.

With particular reference to Figures 3 and 4, each first operative group 22 comprises a carrier arm 55 carrying a respective half-shell of first operative group 22.

Additionally, each support structure 38, in particular each carrier 45, is connected, in particular mounted, to the respective carrier arm 55.

Moreover, each initiator unit 28, in particular each housing 37, is partially arranged within a housing seat 56 of the respective carrier arm 55.

It should be noted that each initiator unit 28 is indirectly carried by the respective carrier arm 55 by means of the respective support structure 38.

In use, packaging machine 1 produces packages 2 filled with the pourable product.

In more detail, conveying device 11 advances web 3 along web advancement path P to the tube forming station. Tube forming and sealing device 12 forms tube 4 from the advancing web 3 and longitudinally seals tube 4. Additionally, filling device 13 fills tube 4 with the pourable product and package forming apparatus 10 forms, transversally seals and transversally cuts tube 4 so as to obtain packages 2.

In further detail, during operation of package forming apparatus 10, operative devices 20 transversally seal and cut tube 4.

During transversal sealing, each sealing group 26 and the respective counter-sealing group 27 engage tube 4 from opposite sides thereof and compress tube 4.

In more detail, during transversal sealing, each initiator unit 28, in particular the respective first sealing surface 35 engages tube 4. Additionally, also the respective sealing anvil 29, in particular second sealing surface 36, engages tube 4 from an opposite side.

A correct alignment of sealing group 26, in particular each initiator unit 28, even more particular each first sealing surface 35, with counter-sealing group 27, in particular sealing anvil 29, even more particular second sealing surface 36, can be easily achieved thanks to spherical joints 40.

If realignment is needed, it is possible to control the respective first locking group 80 in the respective release configuration and/or to control the respective second locking group 81 in the respective manipulation configuration. After having reached the desired relative position between the respective sealing group 26, in particular the respective initiator unit 28, even more particular the respective first sealing surface 35, and the respective counter-sealing group 27, in particular the respective sealing anvil 29, even more particular the respective second sealing surface 36 it is possible to control the respective first locking group 80 in the respective fixing configuration and/or to control the respective second locking group 81 in the respective blocking configuration.

The advantages of sealing device 24 according to the present invention will be clear from the foregoing description.

In particular, thanks to spherical joints 40 it is easily possible to align each sealing group 26, in particular each initiator unit 28, even more particular each first sealing surface 35, with the respective counter-sealing group 27, in particular the respective sealing anvil 29, even more particular the respective second sealing surface 36.

Moreover, spherical joints 40 together with first locking groups 80 and second locking groups 81 easily allow a linear and a rotational (spherical) degree of freedom.

Clearly, changes may be made to sealing device 24 as described herein without, however, departing from the scope of protection as defined in the accompanying claims.

## Claims

1. Sealing device (24) for transversally sealing a tube (4) filled with a pourable product;
the sealing device (24) comprises a sealing group (26) having an initiator unit (28) for initiating transversal sealing, a support structure (38) for carrying the initiator unit (28) and one or more spherical joints (40) connecting the initiator unit (28) to the support structure (38);
wherein each spherical joint (40) comprises a first portion (41) having a first spherical surface (42) and a second portion (43) having a second spherical surface (44) engaged with the first spherical surface (42);
wherein the first portion (41) is connected to the initiator unit (28) and the second portion (43) is connected to the support structure (38);
wherein the sealing device (24) comprises a first locking group (80) controllable in a fixing configuration in which the first portion (41) and the second portion (43) are not movable with respect to one another and a release configuration in which the first portion (41) and the second portion (43) are movable with respect to one another;
wherein the first locking group (80) is configured to be controlled in the fixing configuration during operation of the sealing device (24).

2. Sealing device according to claim 1, wherein the first locking group (80) comprises at least one screw member (53) configured to secure the first portion (41) and the second portion (43) to one another;
wherein each screw member (53) passes through a respective through hole (54) of the support structure (38) and a respective through passage (66) of the second portion (43);
wherein the first locking group (80) is controlled in the fixing configuration and the release configuration with each screw member (53) being, respectively, fastened and loosened;
wherein each screw member (53), the respective through hole (54) and the respective through passage (66) are designed such to allow a relative spherical movement between the first portion (41) and the second portion (43) when each screw member (53) is loosened.

3. Sealing device according to claim 2, wherein each screw member (53) comprises an elongated body (63);
wherein each elongated body (63) passes through the respective through hole (54) and the respective through passage (66);
wherein each elongated body (63) has a body diameter, each through hole (54) has a hole diameter and each through passage (66) has a passage diameter;
wherein the hole diameter and the passage diameter are larger than the body diameter.

4. Sealing device according to claim 2 or 3, wherein each first locking group (80) also comprises one or more spherical washers (68), each spherical washer (68) being interposed between a respective head (64) of one respective screw member (53) and the respective support structure (38).

5. Sealing device according to claim 4, wherein each spherical washer (68) comprises a first washer element (69) having a first spherical surface portion (70) and a second washer element (71) having a second spherical surface portion (72);
wherein the first spherical surface portion (70) and the second spherical surface portion (72) engage one another;
wherein the first spherical surface portion (70) is configured to cooperate with the respective second spherical surface portion (72) to allow a spherical movement of the first washer element (69) and the second washer element (71) with respect to each other.

6. Sealing device according to anyone of the preceding claims, and further comprising a second locking group (81) controllable in a blocking configuration in which the second portion (43) is fixed to the support structure (38) and a manipulation configuration in which the second portion (43) is movable with respect to the support structure (38);
wherein the second locking group (81) is configured to be controlled in the blocking configuration during operation of the sealing device (24).

7. Sealing device according to claim 6, wherein the second locking group (81) comprises at least one screw element (50) configured to secure the second portion (43) to the support structure (38);
wherein each screw element (50) passes through a respective through opening (51) of the support structure (38);
wherein the second locking group (81) is controlled in the blocking configuration and the manipulation configuration with each screw element (50) being, respectively, fastened and loosened;
wherein each screw element (50) and the respective through opening (51) are designed such to allow for a relative linear movement between the second portion (43) and the support structure (38) when each screw element (50) is loosened.

8. Sealing device according to claim 7, wherein each screw element (50) comprises an elongated body element (60);
wherein each elongated body element (60) passes through the respective through opening (51);
wherein each elongated body element (60) has a body element diameter and each through opening (51) has an opening diameter;
wherein the opening diameter is larger than the body element diameter.

9. Sealing device according to any one of the preceding claims, wherein the first spherical surface (42) is convex and the second spherical surface (44) is concave.

10. Sealing device according to any one of the preceding claims, wherein the initiator unit (28) comprises a first sealing surface (35) configured to engage, in use, the tube (4);
wherein the first sealing surface (35) extends along a longitudinal axis (A);
wherein each of the first portion (41) and the second portion (43) has a respective first extension along a first axis (B) perpendicular to the longitudinal axis (A) and a respective second extension along a second axis (C) parallel to the longitudinal axis (A), the first extension being larger than the second extension.

11. Sealing device according to any one of the preceding claims, wherein the initiator unit (28) comprises a housing (37) having an inner space and one or more active elements arranged within the inner space;
wherein each first portion (41) is connected to the respective housing (37).

12. Sealing device according to any one of the preceding claims, wherein the initiator unit (28) comprises a first sealing surface (35) configured to engage, in use, the tube (4);
wherein the first sealing surface (35) extends along a longitudinal axis (A);
wherein the sealing device (24) comprises two spherical joints (40) spaced apart from one another along a direction (D) parallel to the longitudinal axis (A).

13. Package forming apparatus (10) for a packaging machine (1), the package forming apparatus (10) being configured to form packages (2) from a tube (4) filled with a pourable product wherein the package forming apparatus (10) comprises at least one operative device (20) having a sealing device (24) according to any one of the preceding claims.

14. Packaging forming apparatus (10) according to claim 13, wherein the at least one operative device (20) comprises a first operative group (22) comprising the respective sealing group (26) of the sealing device (24) and a second operative group (23) comprising a respective counter-sealing group (27) of the sealing device (24);
wherein the sealing group (26) and the counter-sealing group (27) are configured to engage the tube (4) from opposite sides thereof so as to transversally compress the tube (4) and to transversally seal the tube (4);
wherein the first operative group (22) comprises a carrier arm (55), the support structure (38) of the sealing device (24) being connected to the carrier arm (55).

15. Package forming apparatus according to claim 13 or 14, and further comprising a conveying unit configured to advance the first operative group (22) and the second operative group (23) along respective advancement paths;
wherein the first operative group (22) and the second operative group (46) are configured to cooperate with one another for transversally sealing the tube (4) when advancing along respective operative portions of the respective advancement paths.

16. Packaging machine (1) for forming packages (2) of a pourable product from a tube (4) formed from a web of packaging material (3);
the packaging machine (1) comprises:
- a conveying device (11) configured to advance the web of packaging material (3) along a web advancement path (P) and for advancing the tube (4) along a tube advancement path (Q) ;
- a tube forming and sealing device (12) configured to form the tube (4) from the web of packaging material (3) and to longitudinally seal the tube (4);
- a filling device (13) for filling the tube (4) with the pourable product; and
- a package forming apparatus (10) according to any one of claims 13 to 15.
